# EUROPÄISCHE PATENTANMELDUNG

(11) **EP 0 617 384 A2**
(43) Veröffentlichungstag der Anmeldung: **28.09.1994**
(21) Anmeldenummer: 94102272.5
(22) Anmeldetag: 15.02.1994
(51) Int. Cl.: G07B 15/00

(54) **Vorrichtung zum Erheben einer Strassenbenutzungsgebühr**

(30) Priorität: 20.02.1993 DE 4305324
(71) Anmelder: OPTON Feintechnik Kiel GmbH, D-24106 Kiel (DE)
(72) Erfinder: Tönnies, Jan G, Dipl.-Ing., D-24105 Kiel (DE)
(74) Vertreter: Tönnies, Jan G., Dipl.-Ing.

(57) **Zusammenfassung**

Vorrichtung zum Erheben einer Straßenbenutzungsgebühr, mit einem im Kraftfahrzeug mitzuführenden Wertkartenleser mit Mitteln zum Abbuchen eines bestimmten Betrages von einer in den Wertkartenleser eingeführten Wertkarte in fest vorgegebenen Zeitintervallen.

## Beschreibung

Die Erfindung betrifft eine Vorrichtung zum Erheben einer Straßenbenutzungsgebühr.

Der Betrieb von Kraftfahrzeugen verursacht gesamtwirtschaftliche Kosten, mit denen der Kraftfahrer bisher nicht oder - über die Mineralölsteuer und die Kraftfahrzeugsteuer - nur unzureichend belastet wird. Außerhalb der Bundesrepublik muß der Kraftfahrer weiter über eine Maut oder eine Vignette für die Benutzung einer bestimmten Straße bzw. eines bestimmten Straßentyps zahlen.

Diese Systeme sind nicht in ausreichendem Maße an den von dem Kraftfahrer verursachten Kosten ausgerichtet: die Kraftfahrzeugsteuer und die Vignette haben den Charakter einer die mit zunehmendem Einsatz des Fahrzeugs zunehmenden Kosten in keiner Weise berücksichtigenden Kopfsteuer, auch die Mineralölsteuer und die Maut aber sind nur unzureichend in der Lage, die durch die Benutzung der Straßen verursachten Kosten abzubilden.

Die manuelle Erhebung von Mautgebühren behindert den Verkehrsfluß, eine automatische Erhebung unter Verwendung von Transpondersystemen und einer automatischen Belastung eines dem Kraftfahrzeug zugeordneten Kontos ist aufwendig und stößt auf datenschutzrechtliche Probleme.

Die gesamtwirtschaftlichen Kosten der Nutzung der Straßen (einschließlich des öffentlichen Parkraums) sind wesentlich von dem Zeitpunkt dieser Nutzung abhängig: Wer eine im übrigen leere Autobahn befährt, macht niemandem den Verkehrsraum streitig. Wer sich dagegen zur rush hour durch eine Innenstadt quält, behindert andere Autofahrer in demselben Maße, in dem er durch die anderen Autofahrer behindert wird. Gesamtwirtschaftlich Kosten verursacht damit insbesondere der Autofahrer, der "schleicht" - eine ökonomisch rationale Straßenbenutzungsabgabe sollte daher "lastvariabel" sein, also zu Zeiten einer sich in der Zähigkeit des Verkehrsflusses widerspiegelnden hohen Verkehrsbelastung für eine bestimmte Fahrstrecke einen sein als zu Zeiten, die eine zügige Fahrt erlauben.

Aus der DE 38 33 716 ist es bekannt, bei der Erhebung von Straßenbenutzungsgebühren mit Schreib/Lese-Speichern versehene Karten zu verwenden. Aus der DE 39 27 994 A1 ist es bekannt, von einer in einem in dem Kraftfahrzeug angeordneten Kartenleser eingesteckten Karte in Abhängigkeit von der gefahrenen Strecke Beträge "abzubuchen".

Der Erfindung liegt die Aufgabe zugrunde, eine Vorrichtung zu schaffen, die eine einfache Erhebung von Straßenbenutzungsgebühren in Abhängigkeit von der jeweiligen Belastung des Verkehrsraums erlaubt.

Erfindungsgemäß wird diese Aufgabe durch die im Anspruch 1 angegebenen Merkmale gelöst. Die Unteransprüche geben vorteilhafte Ausgestaltungen der Erfindung an.

Es wird also vorgeschlagen, in den Kraftfahrzeugen einen Wertkartenleser zu installieren, der von einer in diesen eingeführten Wertkarte (also einer Karte nach Art einer Telefonkarte, vorzugswesie eine "Chipkarte") in regelmäßigen Zeitabständen - etwa im Minutentakt - ein fester Betrag - etwa DM 0,10 - abgebucht werden. In einem Zeitraum von einer Stunde werden von der Wertkarte also DM 6.-- abgebucht. Wer eine Strecke von 10 km zu einer verkehrsschwachen Zeit zügig mit 60 km/h zurücklegt (und dabei andere Autofahrer sowenig behindert wie diese ihn), benötigt dafür 10 min, ihm entstehen Kosten von DM 1.--. Wer dieselbe Strecke dagegen zu einer Spitzenbelastung befährt und nur eine Durchschnittsgeschwindigkeit von 20 km/h erreicht, benötigt 30 min und zahlt damit das Dreifache - er wird für die Beanspruchung des knappen Verkehrsraums in adäquater Weise höher belastet als für die Beanspruchung desselben Verkehrsraums zu einem Zeitpunkt mit geringem Verkehrsaufkommen. Bei Annahme einer ausreichenden Preiselastizität wird die Konsequenz dieser lastvariablen Straßennutzungsgebühr eine gewünschte Verstetigung der Belastung des Verkehrsraums sein.

Der Wertkartenleser kann weiter mit einem Empfänger versehen sein, der auf elektromagnetische Signale anspricht, die beispielsweise durch in die Straße verlegte Induktionsschleifen ausgesandt wird. Durch diese elektromagnetischen Signale kann die Abbuchung aktiviert werden bzw. inaktiviert werden, so daß die Abbuchung zu den fest vorgegebenen Zeitintervallen nur innerhalb eines bestimmten, beispielsweise innerstädtischen Bereichs erfolgt. Diese Signale können auch die Zeitintervalle der Abbuchung oder aber die Höhe des jeweils abgebuchten Betrages bestimmen. Auf diese Weise kann beispielsweise auch beim Einfahren in ein Parkhaus bzw. einen Parkplatz die regelmäßige Abbuchung gestartet und bei Verlassen des Parkhauses bzw. -platzes diese wieder beendet werden.

Dabei kann vorgesehen sein, daß die Abbuchung nur während des Betriebs des Kraftfahrzeugs - also bei laufendem Motor - erfolgt.

Nun ist ein solches System in hohem Maße manipulationsgefährdet, so daß besondere Maßnahmen getroffen werden müssen, um die Verwendung eines Kraftfahrzeugs ohne Abbuchung der Wertkarte erfolgt, verhindert wird. Zu diesem Zweck wird weiter vorgeschlagen, daß die Zeiten, zu denen eine Abbuchung von der Wertkarte erfolgt ist, - vorzugsweise auf dieser selbst - gespeichert werden. Dies kann dadurch erfolgen, daß auf der Wertkarte ein Abbuchungsprotokoll geführt wird, indem für einen bestimmten Zeitraum die Uhrzeiten, zu denen eine Abbuchung erfolgt ist, gespeichert werden (die Vorrichtung kann zu diesem Zweck mit einem Funkempfänger versehen sein, der einen die genaue Uhrzeit übermittelnden Sender empfängt). Ein solches Abbuchungsprotokoll ermöglicht bei Fahrzeugkontrollen unschwer das Erkennen jeder Manipulation.

Eine Schaltung, bei der das Kraftfahrzeug nur bei in den Wertkartenleser eingeführter Wertkarte gestartet werden kann, verhindert ein versehentliches Fahren ohne Wertkarte. Ein Fahren ohne gültige Wertkarte kann weiter durch ein optisches und/oder akustisches Signal im Fahrzeug angezeigt werden. Weiter kann die Abbuchungsbereitschaft des Wertkartenlesers, also dessen Funktionsfähigkeit und das Vorhandensein einer nicht erschöpften Wertkarte, dadurch erkennbar gemacht werden, daß die Vorrichtung mit einem bei gegebener Abbuchungsbereitschaft leuchtenden Leuchtfeld und Mitteln zur Anbringung an der Windschutzscheibe des Fahrzeugs versehen ist. Die Abbuchungsbereitschaft des Wertkartengebers wird dann wie bei einer Vignette für jedermann erkennbar.

Bei einer Schaltung, bei der der Wertkartenleser nur Wertkarten mit einer bestimmten Codezahl akzeptiert, dient das Gerät dann zugleich als Diebstahlschutz, wenn ein Starten des Fahrzeugs ohne eine die jeweilige Codezahl beinhaltende Wertkarte nicht möglich ist.

Das Gerät kann mit einem Beschleunigungssensor versehen sein, der auf feinste Erschütterungen reagiert und die Abbuchungsbereitschaft des Gerätes bewirkt.

Durch die Vorrichtung kann auch die Erhebung eines Kraftfahrers für die Nutzung von Parkraum bewirkt werden, indem eine automatische Abbuchung von der Wertkarte in Abhängigkeit von der Parkzeit vorgenommen wird. Dies kann auf derselben Wertkarte (auch mit einer anderen Abbuchungshäufigkeit oder einem andern Abbuchungsbetrag) oder aber auf einer besonderen "Parkkarte" erfolgen.

## Patentansprüche

1. Vorrichtung zum Erheben einer Straßenbenutzungsgebühr, gekennzeichnet durch einen im Kraftfahrzeug mitzuführenden Wertkartenleser mit Mitteln zum Abbuchen eines bestimmten Betrages von einer in den Wertkartenleser eingeführten Wertkarte in fest vorgegebenen Zeitintervallen.

2. Vorrichtung nach Anspruch 1, gekennzeichnet durch Mittel zum Speichern der Uhrzeiten, zu denen Abbuchungen erfolgt sind, auf der Wertkarte.

3. Vorrichtung nach Anspruch 2, gekennzeichnet durch einen Funkempfänger zum Feststellen der von einem Sender übermittelten, die jeweilige Uhrzeit angebenden Signale.

4. Vorrichtung nach einem der vorangehenden Ansprüche, gekennzeichnet durch eine Einrichtung zum Empfangen eines von außen übermittelten, die Abbuchung aktivierenden bzw. inaktivierenden elektromagnetischen Signals.

5. Vorrichtung nach einem der vorangehenden Ansprüche, gekennzeichnet durch eine Einrichtung zum Empfangen eines von außen übermittelten, die Abbuchungszeitintervalle oder die Abbuchungsbeträge bestimmenden elektromagnetischen Signals.

6. Vorrichtung nach einem der vorangehenden Ansprüche, gekennzeichnet durch eine Einrichtung, die das Starten des Kraftfahrzeugs nur bei in den Wertkartenleser eingesteckter Wertkarte erlaubt.

7. Vorrichtung nach einem der vorangehenden Ansprüche, gekennzeichnet durch eine optische Anzeige, die die Abbuchungsbereitschaft des Wertkartenleser außerhalb des Kraftfahrzeugs erkennbar macht.

8. Vorrichtung nach einem der vorangehenden Ansprüche, dadurch gekennzeichnet, daß der Wertkartenleser bei Benutzung der Kraftfahrzeugs ohne in diesen eingeführte Wertkarte oder bei Erschöpfung der in diese eingeführten Wertkarte ein akustisches und/oder optisches Signal abgibt.

9. Vorrichtung nach einem der vorangehenden Ansprüche, dadurch gekennzeichnet, daß der Wertkartenleser mit einer digitalen Anzeige zur Darstellung der dem auf der Wertkarte jeweils verbliebenen Geldbetrag entsprechenden Betriebszeit versehen ist.

10. Vorrichtung nach einem der vorangehenden Ansprüche, dadurch gekennzeichnet, daß der Wertkartenleser nur Wertkarten mit einer bestimmten Codezahl akzeptiert.

11. Vorrichtung nach einem der vorangehenden Ansprüche, dadurch gekennzeichnet, daß der Wertkartenleser mit einem Beschleunigungssensor versehen ist.

12. Wertkarte für eine Vorrichtung nach einem der Ansprüche 1 bis 9.

13. Wertkarte nach Anspruch 12, gekennzeichnet durch die Ausbildung als Chipkarte.

14. Vorrichtung zum Lesen der von der Vorrichtung nach Anspruch 2 oder Anspruch 3 auf der Wertkarte nach Anspruch 12 oder 13 gespeicherten Uhrzeiten, zu denen eine Abbuchung erfolgt ist.
